Europäisches Patentamt

European Patent Office

Office européen des brevets

(11) Numéro de publication: **0 295 999 B1**

(12) **FASCICULE DE BREVET EUROPEEN**

(45) Date de publication de fascicule du brevet: **09.12.92** (51) Int. Cl.⁵: **C01G 43/06**

(21) Numéro de dépôt: **88401322.8**

(22) Date de dépôt: **31.05.88**

(54) **Procédé de préparation de tétrafluorure d'uranium.**

(30) Priorité: **01.06.87 FR 8707646**

(43) Date de publication de la demande:
**21.12.88 Bulletin 88/51**

(45) Mention de la délivrance du brevet:
**09.12.92 Bulletin 92/50**

(84) Etats contractants désignés:
**DE GB**

(56) Documents cités:
**DE-B- 2 167 115**
**GB-A- 712 811**
**LU-A- 42 162**
**US-A- 3 175 879**

**CHEMICAL ABSTRACTS, vol. 84, no. 8, 23
février 1976, page 159, résumé no. 46783v,
Columbus, Ohio, US; & JP-A-75 109 109**

**CHEMICAL ABSTRACTS, vol. 75, no. 10, 6
septembre 1971, page 270, résumé no.
67918x, Columbus, Ohio, US; A.E.P. BROWN
et al.: "Catalytic reduction of aqueous solutions of uranyl nitrate"**

(73) Titulaire: **COMPAGNIE GENERALE DES MATIE-
RES NUCLEAIRES (COGEMA)**
**2, rue Paul Dautier B.P. 4**
**F-78141 Vélizy-Villacoublay(FR)**

(72) Inventeur: **Petit, Jany**
**5 Allée des Boutons d'Or**
**F-78180 Montigny Le Bretonneux(FR)**

(74) Mandataire: **Fort, Jacques**
**CABINET PLASSERAUD 84, rue d'Amsterdam**
**F-75009 Paris(FR)**

## Description

L'invention a pour objet un procédé de préparation de tétrafluorure d'uranium, produit intermédiaire largement utilisé dans l'industrie nucléaire, à partir du nitrate d'uranyle, forme sous laquelle l'uranium neuf ou provenant du retraitement de combustible passe obligatoirement, dans la pratique.

On connaît déjà de nombreux procédés de préparation d'UF$_4$ à partir du nitrate d'uranyle. La plupart utilisent le passage par un composé intermédiaire, l'oxyde d'uranium UO$_2$. On a cependant également proposé un procédé de préparation de tétrafluorure d'uranium UF$_4$ à partir de nitrate d'uranyle UO$_2$(NO$_3$)2 par : réduction de nitrate d'uranyle en nitrate uraneux, en solution nitrique ; puis précipitation de l'uranium (IV) en la solution sous forme de UF$_4$ par l'acide fluorhydrique.

Dans les procédés connus de ce type l'uranium (VI) est réduit en uranium (IV) par voie électrolytique. Un exemple de mise en oeuvre de ces procédés est donné dans le document DE-A-21 67 115. Pour l'homme de métier en effet, la réduction électrolytique avec électrode de mercure ou de platine constitue le procédé classique de réduction de U(VI) en U(IV). L'électrolyse a en effet l'avantage d'être bien connue et de se prêter à un contrôle précis par commande de la tension ou du courant.

Mais l'électrolyse a des inconvénients : les électrolyseurs à diaphragme nécessaires occupent un grand volume. Le rendement est souvent inférieur à 90%, de sorte que de l'uranium reste à la valence VI dans la solution soumise à la seconde étape et que des volumes importants doivent être recyclés. Le milieu d'électrolyse est non confiné, d'où des risques de contamination. Le nettoyage des électrodes est difficile.

L'invention vise à écarter ces difficultés et notamment à effectuer la réduction sous un moindre volume, avec une moindre consommation d'énergie, avec un rendement proche de 100% et ce sans effet défavorable sur les conditions ou les résultats de la mise en oeuvre de l'étape de précipitation.

On connaît de nombreux procédés de laboratoire autres que l'électrolyse permettant de réduire U(VI) en U(IV) en solution nitrique. En particulier, on savait dès 1971 réaliser la réduction catalytique d'une solution aqueuse de nitrate d'uranyle sur des volumes inférieurs au litre en employant l'hydrogène à basse pression en tant qu'agent réducteur (Chemical Abstracts, Vol. 92, No. 10, Mars 1980, p. 752, résumé N° 87290r) L'utilisation d'un tel mode de réduction dans un procédé de préparation d'UF$_4$ du genre ci-dessus défini a semblé jusqu'ici exclue pour diverses raisons suivantes. En particulier, on pouvait craindre la décomposition de l'acide nitrique suivant la réaction :

$$H^+.NO_3^- + 2H^\bullet \rightarrow HNO_2 + H_2O$$

Or, la présence d'une teneur appréciable de nitrite réduirait le taux de conversion apparent. Le sel obtenu par précipitation à l'acide fluorhydrique aurait tendance à se redissoudre par déplacement vers la droite de l'équilibre :

$$UF_4 \rightleftharpoons U^{4+} + 4F^-$$

du fait de la disparition de U$^{4+}$ suivant la réaction

$$U^{4+} + 2HNO_2 \rightarrow UO_2^{2+} + 2H^+ + 2NO$$

qui est auto-catalytique.

On pouvait même craindre que cette réaction auto-catalytique ne soit pas maîtrisable par l'hydrazine du fait de la quantité de nitrite formée dans le réacteur.

L'ajout d'un stabilisateur tel que l'hydrazine ou l'urée, jugé jusqu'ici nécessaire aussi bien dans le cas d'une réduction électrolytique (DE-A-21 67 115) que dans le cas de la réduction catalytique crée des difficultés lorsqu'on recycle des eaux mères provenant de la seconde étape, par exemple lorsque l'uranium traité est enrichi et rend nécessaire une récupération quasi quantitative.

On a également déjà proposé (LU-A-42162) un procédé de réduction de nitrate d'uranyle en nitrate uraneux, pouvant être utilisé comme agent réducteur du plutonium, par l'hydrogène en présence d'ions H + et d'un catalyseur à base d'un métal du groupe du platine, à une pression qui peut être de 5 à 20 bars.

L'invention écarte ces difficultés en effectuant la réduction par voie catalytique par l'hydrogène en présence d'ions H$^+$ sous pression élevée (pratiquement entre 30 et 50 bars, avantageusement entre 40 et 50 bars). Ainsi, la solution nitrique présente au cours de la réduction une haute teneur en hydrogène dissous. Dans ces conditions, la durée nécessaire à la réduction catalytique (donc le temps de séjour dans le réacteur où s'effectue l'opération) est très brève, de quelques minutes (par exemple environ 3 mn) et le risque de décomposition d'une fraction appréciable de l'acide nitrique disparaît. La présence d'hydrogène dissous dans la solution de nitrate uraneux provenant de la réduction catalytique évite la réoxydation de l'uranium de la valence IV à la valence VI et permet d'éviter l'adjonction d'un stabilisateur ou de limiter sa teneur à une valeur très faible.

Une installation convenable de mise en oeuvre en continu du procédé ci-dessus défini, comprend :
  - un réacteur contenant un lit catalytique et muni de moyens permettant d'y introduire sous pression une solution aqueuse nitrique de nitrate d'uranyle et de l'hydrogène en quantité sur-stoechiométrique et d'en extraire la solution de nitrate uraneux ayant traversé le lit, chargée en hydrogène ;

- un pot de détente et d'évacuation de l'hydrogène résiduel,
- au moins une cuve de précipitation de l'ura-nium sous forme d'$UF_4$ par l'acide fluorhydri-que, munie de moyens de soutirage de la suspension d'$UF_4$ ; et
- des moyens de filtration d'$UF_4$.

Pour que la réduction catalytique soit rapide, il est souhaitable de maintenir la température dans le réacteur à une valeur supérieure à 20°C. Mais il faut éviter d'atteindre des températures pour lesquelles il y a décomposition appréciable de l'acide nitrique, ce qui impose de ne pas atteindre 50°C. Dans la pratique, il est souhaitable de ne pas dépasser 30°C. La solution nitrique introduite dans le réacteur a avantageusement une teneur élevée en nitrate d'uranyle, pouvant correspondre à une plage de 150 à 250g d'uranium métal par litre. La réaction étant exothermique, le réglage de température s'effectuera généralement par refroidissement par circulation de liquide.

L'$UF_4$ étant très insoluble, il suffit d'un faible excès d'acide fluorhydrique pour provoquer une précipitation quasi complète, sous forme d'une bouillie ayant une faible teneur en eaux mères. Le rendement de l'ensemble du processus dépasse souvent 99%, ce qui permet de se dispenser d'un recyclage complet. Les eaux mères récupérées lors de la filtration contiennent essentiellement de l'acide nitrique qui, moyennant un traitement simple, peut être purifié et concentré suffisamment pour que puisse être commercialisée la partie qui n'est pas nécessaire pour préparer la solution nitrique soumise à réduction catalytique.

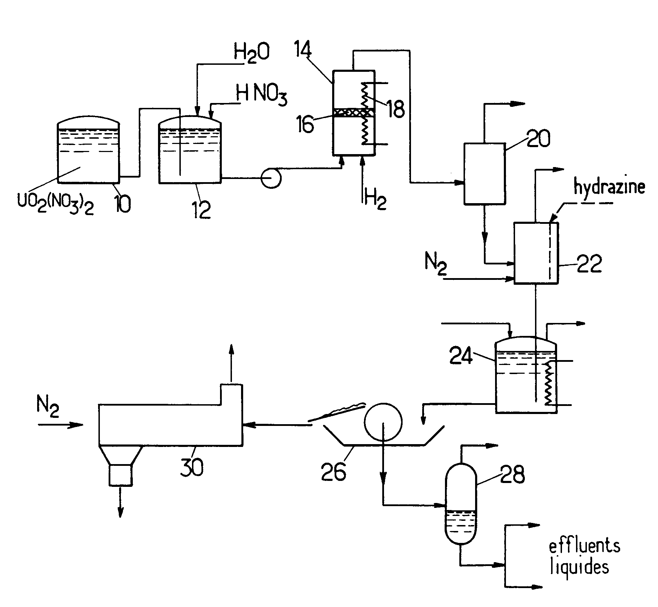

L'invention sera mieux comprise à la lecture de la description qui suit d'un mode particulier de réalisation d'une installation et du procédé qu'elle met en oeuvre. La description se réfère à la Figure unique qui l'accompagne et montre schématiquement les composants principaux de l'installation.

L'installation montrée schématiquement sur la Figure est destinée à fournir de l'$UF_4$ sec à partir de nitrate d'uranyle provenant par exemple d'une usine de concentration et de purification d'uranium naturel ou d'une usine de retraitement de combustible irradié.

Au cours d'une première opération, la concentration et l'acidité de la solution à traiter sont ajustées. Pour cela, le nitrate d'uranyle prélevé dans une cuve de stockage 10 est amené à une cuve de préparation 12 munie de moyens d'apport d'eau et d'acide nitrique.

La concentration de la solution est avantageusement amenée à une valeur comprise entre 150 et 250 g d'uranium par litre. La concentration en acide nitrique doit être suffisante pour fournir les ions H + nécessaires à la réaction et elle dépendra donc de la concentration de la solution en uranium. Dans la pratique, l'acide nitrique doit être en excès par rapport à la quantité stoechiométriquement nécessaire, qui est de 2 moles d'acide nitrique par mole de nitrate d'uranyle à réduire. La concentration d'acide nitrique sera comprise entre 2N et 5N et obtenue par exemple par ajout d'acide nitrique 7N à 13N, pour les teneurs en $UO_2(NO_3)_2$ données plus haut. Cette concentration est choisie de façon à conserver une acidité supérieure à 0,5N en fin de réaction

La solution nitrique de nitrate d'uranyle provenant de la cuve 12 et de l'hydrolyse sont injectés sous pression au fond du réacteur 14 de réduction catalytique, au-dessous du lit catalytique 16. Le lit catalytique peut être de nature classique, par exemple à base de nickel, platine ou palladium sur un support ayant une bonne tenue mécanique et une résistance élevée à l'acide nitrique. Ce support pourra notamment être l'alumine ou la silice.

L'hydrogène introduit doit être en quantité sur-stoechiométrique par rapport à celle nécessaire à la réaction de reduction :

$$UO_2(NO_3)_2 + 2HNO_3 + H2 \rightarrow U(NO_3)_4 + 2H_2O$$

Dans la pratique, ii suffira en général d'un excès d'hydrogène de l'ordre de 20%, bien qu'on puisse utiliser des teneurs très supérieures.

Les réactifs sont introduits sous pression élevée de façon à augmenter la teneur d'hydrogène dissous dans le milieu nitrique ; on obtient ainsi un rendement élevé même pour des temps de séjour brefs. Dans la pratique, le rendement devient très satisfaisant dès une pression de 30 bars et on utilisera en général une pression comprise entre 40 et 50 bars. La température sera généralement maintenue entre 20°C (la cinétique de réaction se ralentissant considérablement au-dessous de cette valeur) et 30°C (de façon à être très loin du seuil de 50°C à partir duquel il y a décomposition rapide de $HNO_3$, d'où réoxydation de l'uranium qui, présent dans l'eau de cristallisation, pourrait provoquer la formation ultérieure d'$UO_2F_2$, lors de la déshydratation).

La température est régulée par exemple à l'aide d'un serpentin 18 parcouru par un liquide réfrigérant, la réaction étant exothermique. Le temps de séjour peut être réduit à quelques minutes, par exemple 3 mn, ce qui limite à un taux négligeable la décomposition de l'acide nitrique aux températures ci-dessus.

La solution sous pression extraite à la partie haute du réacteur 14 est envoyée dans un pot de détente 20 qui fournit des effluents gazeux hydrogénés, envoyés à une unité de traitement en vue de la réutilisation éventuelle de l'hydrogène, et une solution dégazée qui est envoyée à une cuve 24 de précipitation, par l'intermédiaire d'un barboteur 22 traversé par un flux d'azote destiné à entraîner l'hydrogène résiduel.

La présence d'une teneur importante d'hydrogène dissous jusqu'à la détente dans le pot 20 permet d'éviter jusque là toute réoxydation. A partir du moment où l'hydrogène a été évacué et jusqu'à précipitation, il ne s'écoule qu'un délai court, de sorte que souvent il sera inutile d'ajouter un produit stabilisateur avant envoi à la cuve de précipitation 24. Cependant, on peut dans certains cas ajouter une faible teneur d'hydrazine à la solution qui quitte le barboteur 22.

La cuve de précipitation 24 est munie de moyens d'amenée de la solution provenant du barboteur qui ne contient pratiquement plus d'hydrogène et de moyens d'amenée des réactifs, constitués par de l'acide fluorhydrique. La précipitation s'effectue selon la réaction :

$$U(NO_3)_4 + 4HF \rightarrow UF_4 + 4HNO_3$$

L'acide fluorhydrique apporté doit être en excès par rapport à la quantité stoechiométriquement nécessaire pour tenir compte de l'équilibre de dissociation $HF \rightleftharpoons H^+ + F^-$. L'excès nécessaire dépend du pH de la solution et du degré de complexation du fluor par les traces d'uranium (VI) résiduel, qui sera toujours en très faibles quantité. Dans la pratique, l'excès d'acide fluorhydrique sera compris entre 1 et 20%, et sera habituellement d'environ 5% pour que la réaction de précipitation soit à coup sûr complète. Celle-ci est très rapide, du fait de la très faible solubilité de $UF_4$. Pour augmenter la filtrabilité, il est souhaitable d'opérer à température supérieure à 30°C en restant en dessous de 50°C.

L'acide fluorhydrique est avantageusement introduit sous forme concentrée, par exemple à une concentration initiale de 50 à 70% en poids, de façon à obtenir un mélange final (précipitat et eaux mères) ayant une teneur très élevée en $UF_4$.

On donnera maintenant, à titre d'exemple, les conditions opératoires qui ont été utilisées sur un pilote industriel.

On a préparé tout d'abord, dans la cuve 12, une solution nitrique de nitrate d'uranyle à 150g/l d'équivalent uranium, avec un rapport $HNO_3/U = 2,86$.

La solution a été réduite en continu dans le réacteur sous pression 14 par un flux d'hydrogène circulant en co-courant en présence d'un Catalyseur constitué par du platine sur support en alumine. La pression de travail était de 40 bars et la chaleur de réaction était évacuée par un système de refroidissement maintenant la température à 30°C. Le débit d'hydrogène introduit était en excés de 20% par rapport à la stoechiométrie pour pallier aux fluctuations de concentration et de débit.

La capacité de réduction était de 12 kg/h, le temps de séjour étant d'environ 5 mn. Le rendement de la réduction a été supérieur à 99%.

La solution de nitrate uraneux obtenue à la sortie du réacteur 14 a été dégazée dans un séparateur 20 à pression atmosphérique, l'hydrogène libéré étant recyclé. La solution de nitrate uraneux dégazée a été introduite, sans ajout de stabilisateur, dans une cuve de réaction 24 munie d'un agitateur (non représenté) contenant une solution d'acide fluorhydrique à 50%. Un excès d'acide fluorhydrique de 5% par rapport à la stoechiométrie a été maintenu pour garantir la précipitation quasi totale de l'uranium IV.

Dans l'installation pilote, deux cuves 24 en cascade étaient prévues, ce qui favorise le grossissement des grains d'$UF_4$, augmente le temps de séjour et permet de se rapprocher des conditions de stoechiométrie pour HF en tenant compte de la constante de dissociation de HF et de la complexation de la très faible teneur (moins de 1%) en $UO_2^{++}$ non converti. Ce nombre de deux cuves en cascade n'est pas limitatif.

Le mélange de précipité et d'eaux mères soutiré au fond des cuves de réaction 24 a été envoyé à un dispositif de filtration 26. L'$UF_4$ séparé a été lavé par une solution d'HF par l'eau, puis séché à une température finale supérieure à 120°C, sous gaz inerte. Les eaux mères étaient envoyées vers un séparateur 28 permettant de récupérer des effluents liquides contenant essentiellement de l'acide nitrique, réutilisable après traitement, et des effluents gazeux.

Le traitement des eaux mères peut être effectué dans une colonne à distiller : on récupère, au pied de la colonne, l'acide nitrique et l'uranium n'ayant pas réagi (uranium non réduit et uranium non précipité).

Le rendement du procédé s'est révélé supérieur à 99%, rendant inutile le recyclage en cas de traitement d'uranium naturel. Les quantités à recycler dans le cas de préparation de fluorure d'uranium enrichi restent faibles et ne compliquent pas notablement l'installation.

## Revendications

1.  Procédé de préparation d'$UF_4$ à partir de nitrate d'uranyle, suivant lequel on réduit le nitrate d'uranyle en nitrate uraneux, en solution aqueuse nitrique ; et on précipite l'uranium (IV) de la solution sous forme d'$UF_4$ par l'acide fluorhydrique ;

caractérisé en ce qu on effectue la réduction par l'hydrogène en continu par circulation sur un lit de catalyseur en présence d'ions H + sous pression supérieure à 30 bars et à une température inférieure à 50°C, avec un excès d'hydrogène par rapport à la quantité stoechiométriquement nécessaire, la concentration d'acide nitrique étant comprise entre 2N et 5N.

2. Procédé selon la revendication 1, caractérisé en ce que la pression est comprise entre 40 et 50 bars.

3. Procédé selon la revendication 1 ou 2, caractérisé en ce que la durée de la réduction est de l'ordre de cinq minutes.

4. Procédé selon la revendication 1, caractérisé en ce que le catalyseur est à base de platine, de palladium ou de nickel sur support en silice ou en alumine.

5. Procédé selon la revendication 4, caractérisé en ce que la réduction est effectuée à une température comprise entre 20°C et 30°C.

## Claims

1. A process for the production of UF$_4$ from uranyl nitrate, according to which uranyl nitrate is reduced to uranous nitrate in a nitric aqueous solution; and uranium (IV) is precipitated from the solution as UF$_4$ by hydrofluoric acid; characterized in that reduction by hydrogen is carried out as a continuous process by circulation on a catalyst bed in presence of ions H + under a pressure exceeding 30 bars and at a temperature lower than 50°C, with hydrogen in excess with respect to the stoechiometrically required quantity, the nitric acid concentration acid being comprised between 2N and 5N.

2. A process according to claim 1, characterized in that the pressure is comprised between 40 and 50 bars.

3. A process according to claim 1 or 2, characterized in that the duration of the reducing step is of about five minutes.

4. A process according to claim 1, characterized in that the catalyst is a platinum, palladium or nickel base catalyst on a silica or alumina support.

5. A process according to claim 4, characterized in that the reducing step is carried out at a temperature comprised between 20°C and 30°C.

## Patentansprüche

1. Verfahren zur Herstellung von UF$_4$ ausgehend von Uranylnitrat, wobei in wäßriger salpetersaurer Lösung Uranylnitrat zu U(IV)-Nitrat$_3$ reduziert wird und das U(IV) der Lösung mit Fluorwasserstoffsäure in Form von UF$_4$ ausgefällt wird,
**dadurch gekennzeichnet**,
daß die Reduktion kontinuierlich mit Wasserstoff durch Umwälzung auf einem Katalysatorbett in Gegenwart von H$^{+}$-Ionen unter einem Druck von mehr als 30 bar und bei einer Temperatur unter 50 °C mit einem Überschuß an Wasserstoff, in bezug auf die nötige stöchiometrische Menge durchgeführt wird, wobei die Konzentration an Salpetersäure zwischen 2 md/l und 5 md/l liegt.

2. Verfahren nach Anspruch 1,
dadurch gekennzeichnet,
daß der Druck zwischen 40 und 50 bar liegt.

3. Verfahren nach Anspruch 1 oder 2,
dadurch gekennzeichnet,
daß die Dauer der Reduktion in der Größenordnung von 5 Minuten liegt.

4. Verfahren nach Anspruch 1,
dadurch gekennzeichnet,
daß der Katalysator ein solcher auf der Basis von Platin, Palladium oder Nickel auf einem Kieselsäure- oder Aluminiumoxidträger ist.

5. Verfahren nach Anspruch 4,
dadurch gekennzeichnet,
daß die Reduktion bei einer Temperatur zwischen 20 °C und 30 °C durchgeführt wird.

$H_2O$

$H NO_3$

14

18

16

20

hydrazine

$H_2$

$N_2$

22

24

$N_2$

30

26

28

effluents liquides

$UO_2(NO_3)_2$

10

12